# EUROPÄISCHE PATENTSCHRIFT

(11) **EP 1 650 098 B1**
(45) Veröffentlichungstag und Bekanntmachung des Hinweises auf die Patenterteilung: **19.09.2012**
(21) Anmeldenummer: 05022199.3
(22) Anmeldetag: 12.10.2005
(51) Int. Cl.: B61G 5/02, B61D 3/10

(54) **Gelenkverbindung von Wagenkästen**
Articulated link of railway cars
Couplage articulé de véhicules ferroviaires

(30) Priorität: 14.10.2004 DE 102004050006
(43) Veröffentlichungstag der Anmeldung: 26.04.2006
(60) Teilanmeldung: 08150140.5
(73) Patentinhaber: Schaeffler Technologies AG & Co. KG, 91074 Herzogenaurach (DE)
(72) Erfinder: Krome, Andreas, 91097 Oberreichenbach (DE)

(56) Entgegenhaltungen:
- US-A- 2 250 426
- US-A- 4 485 743
- US-A- 5 131 331
- US-A- 5 586 506

## Beschreibung

### Anwendungsgebiet der Erfindung

Die Erfindung betrifft eine Anordnung zum gelenkigen Verbinden von Wagenkästen eines mehrgliedrigen Fahrzeugs mit Hilfe eines Gelenkes mit sphärischen Tragflächen.

### Hintergrund der Erfindung

Eine gattungsgemäße Gelenkanordnung zum Verbinden von Wagenkästen eines mehrgliedrigen Schienenfahrzeuges ist aus der EP 0 559 635 B1 vorbekannt. Sie besteht aus zwei konzentrisch ineinander angeordneten Axial-Gelenklagern, wobei das äußere Axial-Gelenklager als Hauptlager und das innere Axial-Gelenklager als Abhebesicherung fungiert. Damit keine Zwangskräfte in das System eingeleitet werden können, ist es erforderlich, dass die Lagermittelpunkte beider Lager übereinstimmen. Bedingt durch die Konstruktion dieser Lageranordnung entstehen durch den Druckwinkel der verwendeten Axial-Gelenklager bei Radiallasten axiale Kräfte (Spreizkräfte) entgegen der Gewichtskraft des aufliegenden Gehäuses. Insbesondere bei Unfällen reicht die Gewichtskraft des aufliegenden Wagenteils nicht aus, um die entgegengesetzt gerichtete axiale Abhebekraft (Spreizkraft) zu kompensieren. Für diesen Abhebefall muss durch das innere Gelenklager verhindert werden, dass der Innenring des Hauptlagers aus dem Außenring springt und sich die Gelenkverbindung damit löst. Hierzu wird die Wellenscheibe des inneren Lagers mittels Bolzen oder Schrauben mit dem Gehäuse verbunden. Diese Schrauben müssen je nach Lageraufbau dauernde dynamische oder statische Lasten aufnehmen.

Die Nachteile einer solch gattungsgemäß ausgebildeten Lageranordnung liegen in folgendem:
- Durch den komplexen Aufbau sind eine Vielzahl von Lagerbestandteilen zu fertigen und zu montieren.
- Da zum einwandfreien Funktionieren der Lageranordnung beide Lagermittelpunkte übereinstimmen müssen, ist ein hoher Fertigungsaufwand erforderlich.
- Axiale Abhebekräfte (Spreizkräfte) aufgrund von auftretenden Radialkräften müssen über zusätzliche Bauteile (Schraubenbolzen) abgefangen werden.
- Aufgrund der Komplexität der Lageranordnung ist auch eine aufwändige Umgebungskonstruktion erforderlich.
- Aufgrund der Komplexität der Lageranordnung beansprucht diese einen erheblichen Bauraum.

Ähnliche Lageranordnungen zum gelenkigen Verbinden von Wagenkästen eines mehrgliedrigen Fahrzeuges sind in der DE 101 39 970 A1 und in der WO 03/09265 A1 beschrieben. Aber auch hier treffen die vorstehend genannten Nachteile zu, d. h., sie bestehen aus vielen Einzelbestandteilen und erfordern eine hohe fertigungstechnische Genauigkeit.

Zwar sind dem Fachmann in diesem Zusammenhang auch Anwendungen von Radial-Gelenklagern bei der Kupplung von Fahrzeugeinheiten für Schienenfahrzeuge bekannt, die sich jedoch von der erfindungsgemäßen Lösung wesentlich unterscheiden. So ist beispielsweise in der DE 195 43 183 A1 eine Kupplung zwischen zwei Eisenbahnwagen beschrieben, die aus einer mit einem Wagen verbundenen Zugstange besteht, die von einem benachbarten Wagen aufgenommen ist. Dies erfolgt derart, dass ein Verbindungsstift eine kugelförmige Außenfläche aufweist, die wiederum von einer ebenfalls gewölbten Buchse aufgenommen ist. Die Buchse ist aus einem elastischen Material gefertigt, so dass bei einer Schwenkbewegung der Zugstange in horizontaler Richtung eine Verformung der gewölbten Buchse erfolgt. Dies wiederum bedeutet, es liegt im strengen Sinne kein Radial-Gelenklager vor, bei dem die beiden Lagerringe ohne Verformung gegeneinander verschwenkbar sind. Darüber-hinaus ist diese Kupplung so aufgebaut, dass eine Kupplungsgabel über einen Verbindungsstift die in der Zugstange angeordnete gewölbte Buchse durchsetzt, wobei der Verbindungsstift in zwei in axialer Richtung voneinander beabstandeten Gabelwangen fixiert ist. Das wiederum bedeutet, dass eine solche Verbindung in axialer Richtung viel Bauraum beansprucht.

Ähnliche Lösungen, d.h. bei denen bei einer Verschwenkung von Kupplungsgabel und Kupplungslasche eine Deformation eines elastischen Materials erfolgt, gehen aus der DE 199 19 536 A1 und der US 4,485,743 hervor. Negativ ist ebenfalls die aufwendige Anbindung an den Anschlusskonstruktionen, d.h. eine Kupplungsgabel ist mit einer Kupplungslasche verbunden, so dass in axialer Richtung großer Bauraum erforderlich ist.

### Zusammenfassung der Erfindung

Ausgehend von den Nachteilen des bekannten Standes der Technik liegt der Erfindung die Aufgabe zugrunde, eine Gelenkverbindung bereitzustellen, die aus wenig Bestandteilen zusammengesetzt ist und sich einfach fertigen lässt.

Erfindungsgemäß wird diese Aufgabe nach dem kennzeichnenden Teil von Anspruch 1 in Verbindung mit dessen Oberbegriff gelöst.

Die Aufgabe der erfindungsgemäßen Lagerung ist es,
- die Zug- und Druckkräfte in Fahrzeuglängsrichtung (+/- X-Richtung) beim Beschleunigen und Bremsen zu übertragen,
- die Querkräfte bei Kurvenfahrten in +/- Y-Richtung zu übertragen,
- die Gewichtskräfte von einem Wagenteil auf den anderen in - Z-Richtung (auf die Schienen gerichtet) zu übertragen,
- die Zugkräfte in + Z-Richtung bei Unfällen oder Reparaturarbeiten aufzunehmen,
- die Winkelbeweglichkeit um alle drei Achsen zu gewährleisten.

Derartige Radial-Gelenklager bestehen lediglich aus dem Innenring und dem Außenring und sind auf dem Markt in unterschiedlichen Größenordnungen preiswert zu erhalten. Der Lageraufbau und damit ebenfalls die zugehörige Anschlusskonstruktion ist somit wesentlich vereinfacht. Bedingt durch den Aufbau als Radial-Gelenklager werden bei hohen radialen Lasten keine gelenktrennenden Axialkräfte im System induziert. Die Spreizkräfte werden bei axial geteiltem Radial-Gelenklager durch das Material des Außenringes aufgenommen, so dass keine zusätzlichen Elemente zum Zusammenhalt der Lageranordnung erforderlich sind. Ein weiterer Vorteil des erfindungsgemäßen Lagers ist sein reduziertes Gewicht, ein geringer Bauraum bei gleichzeitig hoher radialer und axialer Tragfähigkeit.

Vorteilhafte Ausführungsvarianten der Gelenklageranordnung sind in den Unteransprüchen 2 bis 9 beschrieben.

So geht aus Anspruch 2 hervor, dass zwischen Innenring und Außenring eine Gleitschicht angeordnet ist, wobei nach Anspruch 3 vorgesehen ist, dass diese Gleitschicht aus PTFE (Polytetrafluoräthylen) besteht und als Verbundwerkstoff, Folie oder als Gewebe ausgebildet ist.

Durch die Gleitschicht wird das Gelenklager wartungsfrei. Sie bildet jeweils die Gleitlaufbahn, überträgt die auftretenden Kräfte und übernimmt die Schmierung. PTFE-Verbundwerkstoff, PTFE-Folie und PTFE-Gewebe sind in ihrer Leistungsfähigkeit aufsteigend, d. h., PTFE-Gewebe ist die leistungsstärkste Gleitschicht. Auf den Unterschied der genannten PTFE-Gleitschichten wird an dieser Stelle nicht ausführlich eingegangen, da diese im INA-Katalog 236 "Gelenklager, Gleitbuchsen, Gelenkköpfe" auf den Seiten 48, 49 und 50 ausführlich beschrieben sind.

Nach einem weiteren Merkmal gemäß Anspruch 4 ist vorgesehen, dass der Außenring gesprengt ist. Dies ist erforderlich, um das Radial-Gelenklager überhaupt montieren zu können. In der Regel wird die Sprengfuge axial ausgerichtet sein, um in Fahrtrichtung wirkende Kräfte durch den Außenring sicher aufzunehmen.

Nach Anspruch 5 ist vorgesehen, dass das Radial-Gelenklager mit einer Dichtung versehen ist. Diese schützt die Lageranordnung vor eindringendem Schmutz und ist an die Betriebs- und Umgebungsbedingungen anzupassen, wobei die radiale Beweglichkeit des Lagers und die entsprechenden Schwenkwinkel aber zu beachten sind.

Nach einem weiteren anderen zusätzlichen Merkmal der Erfindung gemäß Anspruch 6 ist vorgesehen, dass das Radial-Gelenklager asymmetrisch ausgebildet ist, wobei in Richtung der Lagerachse Z Innenring und Außenring zueinander versetzt angeordnet sind und bezogen auf einen Mittelpunkt des Innenringes nach oben in Richtung der positiven Lagerachse Z der Innenring den Außenring und nach unten in Richtung der negativen Lagerachse Z der Außenring den Innenring in axialer Richtung überragt.

Durch diese asymmetrische Ausbildung ist sichergestellt, dass das Lager den jeweiligen Belastungsverhältnissen anpassbar ist. Der nach unten verlängerte Außenring sorgt dafür, dass das Lager in dieser Richtung erhöhte axiale Kräfte aufnehmen kann, die durch die Gewichtskraft der aufliegenden Anschlusskonstruktion bedingt sind.

Schließlich sind in den Ansprüchen 7 bis 9 die Verbindung zwischen Innenring und Anschlusskonstruktion bzw. die Verbindung zwischen Außenring und Anschlusskonstruktion beschrieben.

Gemäß Anspruch 7 ist vorgesehen, dass der Innenring mit einem zylindrischen Zapfen versehen ist, der von einer zugehörigen Ausnehmung der Anschlusskonstruktion aufgenommen ist, wobei beide Teile durch ein Befestigungsmittel miteinander verbunden sind.

Aus Anspruch 8 geht hervor, dass der Innenring mit einer Aufnahmebohrung versehen ist, in die ein zugehöriger Zapfen der Anschlusskonstruktion eingreift und beide Teile durch ein Befestigungsmittel miteinander verbunden sind.

Schließlich geht aus Anspruch 9 hervor, dass der Außenring von einer Ausnehmung der Anschlusskonstruktion aufgenommen ist und beide Teile durch ein Befestigungsmittel miteinander verbunden sind.

Die Erfindung wird an nachstehenden Ausführungsbeispielen näher erläutert.

### Kurze Beschreibung der Zeichnungen

Es zeigen:
- Figur 1: einen Längsschnitt durch ein erfindungsgemäßes Radial-Gelenklager,
- Figuren 2 und 3: einen Längsschnitt durch ein erfindungsgemäßes Radial-Gelenklager mit zugehörigen Anschlusskonstruktionen.

### Ausführliche Beschreibung der Zeichnungen

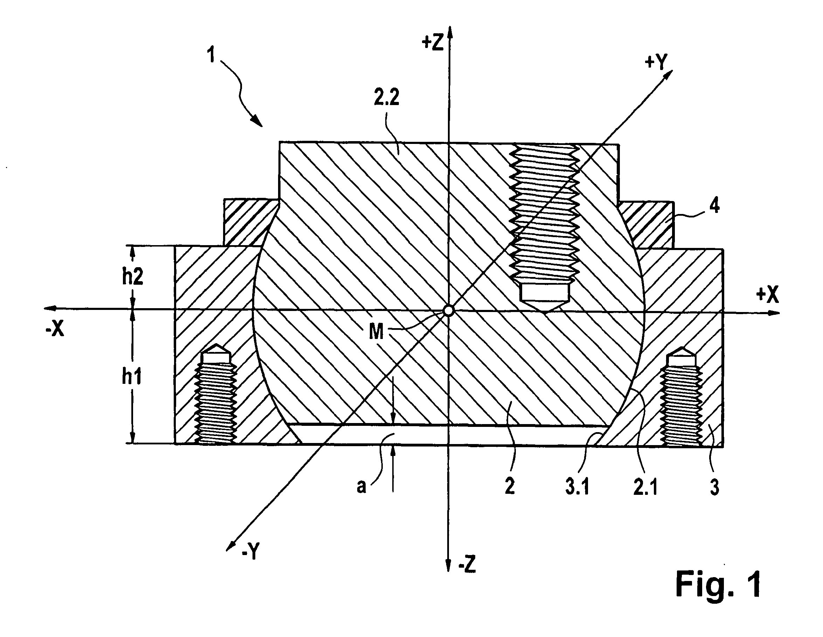

Das in Figur 1 gezeigte, mit der Dichtung 4 abgedichtete und mit dem Bezugszeichen 1 versehene Radial-Gelenklager besteht aus dem Innenring 2 mit der zugehörigen konvex gewölbten Lagerfläche 2.1 und dem Außenring 3 mit der zugehörigen konkav gewölbten Lagerfläche 3.1. Die Durchmesser von Innenring 2 und Außenring 3 sind dabei so aufeinander abgestimmt, dass ggf. eine geeignete Gleitschicht zwischen beiden angeordnet ist, die im Ausführungsbeispiel jedoch zeichnerisch nicht dargestellt ist. Durch den Mittelpunkt M des kugelförmigen Teils des Lagerinnenringes 2 ist ein dreiachsiges rechtwinkliges Koordinatensystem mit den Achsen X, Y und Z gelegt, wobei die horizontale Achse X der Fahrzeuglängsrichtung entspricht. Längskräfte, die aus Beschleunigungs- und Bremsvorgängen des Fahrzeugs resultieren, aber auch durch Kuppel- oder Aufprallsituationen auf die Fahrzeugstirnseiten entstehen, werden als radiale Kräfte auf das Lager in X-Richtung weitergeleitet. Durch die Bauform trägt das Lager diese Lasten über die sphärischen Gleitflächen 2.1, 3.1 von Innenring 2 und Außenring 3. Die entstehenden Spreizkräfte werden durch das Material des Außenringes 3 getragen, wobei keine zusätzlichen Maßnahmen zur sicheren Übertragung erforderlich sind. Die vertikal ausgerichtete Achse Z weist mit ihrem Negatiworzeichen in Richtung Auflage, d. h., in Richtung Schienenkörper und mit ihrem Positiworzeichen vom Schienenkörper weg. In Richtung der Achse Z wirken einerseits Gewichtskräfte der Anschlusskonstruktion und andererseits vom Schienenkörper ausgehende Kräfte. Schließlich gehört zum Koordinatensystem die Achse Y, in deren Richtung bei Kurvenfahrten auftretende Querkräfte wirken.

Wie aus Figur 1 weiter erkennbar, ist das Radial-Gelenklager 1 asymmetrisch ausgebildet, wobei bezogen auf den Mittelpunkt M der Außenring 3 in Richtung der negativen Z-Achse die Höhe h1 und in Richtung der positiven Z-Achse die Höhe h2 aufweist, wobei h1 > h2 ist. Durch diese in Richtung der positiven Z-Achse geringere Bauhöhe h1, die geringer als bei einem normalen Radial-Gelenklager ist, wird Bauraum eingespart. Sie muss jedoch so groß sein, dass maximal auftretende Zugkräfte am Innenring 2 in Richtung der positiven Z-Achse sicher aufgenommen werden können. Durch den asymmetrisch nach unten verlängerten Außenring 3 ist der Innenring 2 in diesem in nicht verschwenkter Stellung um den Betrag a nach oben verschoben angeordnet, so dass er um die Achse Z verschwenkbar ist, ohne an eine nicht dargestellte Anschlusskonstruktion anzustoßen. Figur 1 zeigt weiter, dass die Lagerflächen 2.1, 3.1 der Lagerringe 2, 3 in Richtung der Achse Z ausgehend vom Mittelpunkt M unterschiedlich groß sind. So ist erkennbar, dass die Lagerflächen 2.1, 3.1 in Richtung der negativen Z-Achse größer sind als die Lagerflächen 2.1, 3.1 in Richtung der positiven Z-Achse. Diese ungleichmäßige Aufteilung der Lagerflächen 2.1, 3.1 sorgt dafür, dass das Lager in Richtung der negativen Z-Achse eine höhere axiale Tragfähigkeit aufweist als in Richtung der positiven Z-Achse. Auf diese Weise kann das Eigengewicht der aufliegenden Anschlusskonstruktion sicher abgestützt werden. Der Außenring 3 ist axial einseitig gesprengt, damit der Innenring 2 von oben bei der Montage eingefedert werden kann. Es ist aber, auch denkbar, den Außenring 3 zweiteilig auszubilden, d. h., mit zwei axialen Sprengfugen zu versehen.

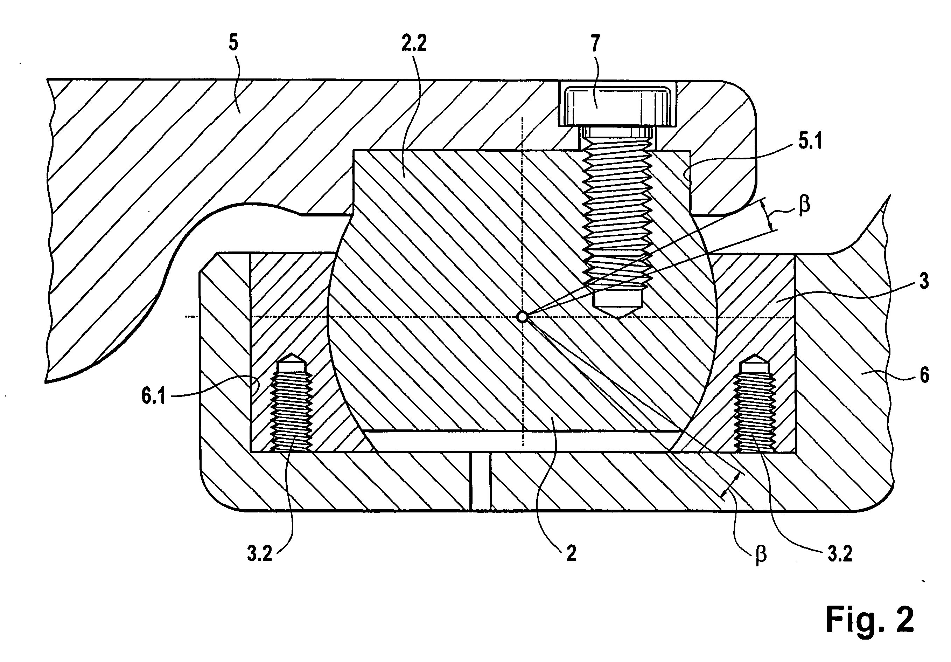

In Figur 2 ist die Verbindung eines erfindungsgemäßen Radial-Gelenklagers 1 mit den Anschlusskonstruktionen 5, 6 zeichnerisch dargestellt, die hintereinander angereihte Wagenkästen eines mehrgliedrigen Fahrzeuges bilden. Der Innenring 2 ist im Anschluss an seine konvexe Lagerfläche 2.1 mit dem zylindrischen Zapfen 2.2 versehen, der von einer zugehörigen Ausnehmung 5.1 der oberen Anschlusskonstruktion 5 umgeben ist. Die Verbindung zwischen Anschlusskonstruktion 5 und Innenring 2 erfolgt derart, dass beide mit Hilfe der Befestigungsschraube 7 fest aneinander fixiert sind. Der Außenring 3 des Radial-Gelenklagers 1 wird von einer Ausnehmung 6.1 der unteren Anschlusskonstruktion 6 aufgenommen und wiederum über Befestigungsschrauben gehalten, die jedoch im Ausführungsbeispiel nicht dargestellt sind. Diese Befestigungsschrauben durchsetzen die untere Anschlusskonstruktion 6 und werden in die mit einem Gewinde versehenen Gewindebohrungen 3.2 einschraubt. Die Befestigung des Innenringes 2 in der Anschlusskonstruktion 5 bzw. die Befestigung des Außenringes 3 in der Anschlusskonstruktion 6 soll jedoch nicht auf die beschriebenen Befestigungsschrauben 7 beschränkt sein. Denkbar sind alle dem Fachmann geläufigen Befestigungsmöglichkeiten. So ist es beispielsweise möglich, dass zur Befestigung des Außenringes 3 die untere Anschlusskonstruktion 6 an ihrem oberen Ende mit einem Freistich versehen ist, in die ein geschlitzter Sicherungsring eingesetzt wird, der dann die obere axiale Fläche des Außenringes 3 teilweise überdeckt.

Der Figur ist weiter zu entnehmen, dass der Schwenkwinkel β im Ausführungsbeispiel mit etwa 7° angegeben ist. Unter Schwenkbewegung ist dabei eine in der Richtung umkehrende Relativbewegung der beiden Lagerringe 2, 3 zueinander um die Lagerachse Z zu verstehen. Dies bedeutet konkret, dass im vorliegenden Fall beide Anschlusskonstruktionen 5, 6 um etwa 7° gegeneinander verschwenkt werden können, ohne dass sie sich berühren.

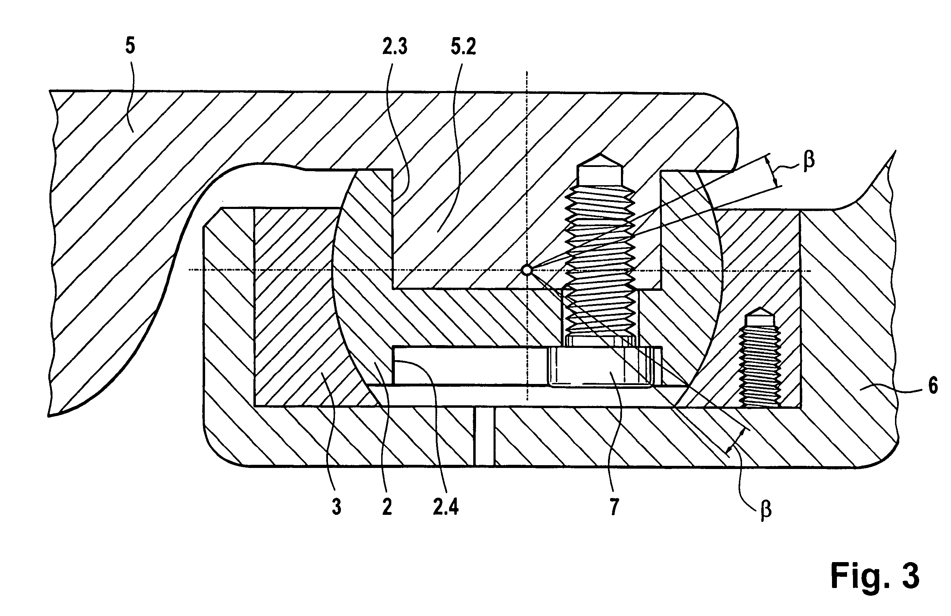

In Figur 3 ist schließlich eine weitere Befestigungsart des Innenringes 2 an der oberen Anschlusskonstruktion 5 zeichnerisch dargestellt. Dies erfolgt derart, dass die obere Anschlusskonstruktion 5 mit einem in axialer Richtung gerichteten Zapfen 5.2 versehen ist, der in eine zugehörige Aufnahmebohrung 2.3 des Innenringes 2 eingeführt ist. Am gegenüberliegenden stirnseitigen Ende ist der Innenring 2 mit einer weiteren Aufnahmebohrung 2.4 versehen, so dass eine durch den Innenring 2 in die obere Anschlusskonstruktion 5 eingesetzte Befestigungsschraube in dieser Aufnahmebohrung 2.4 mit ihrem Kopf eingesetzt ist und so das Verschwenken des Radial-Gelenklagers 1 nicht behindern kann.

### Bezugszeichen

- 1: Radial-Gelenklager
- 2: Innenring
- 2.1: konvexe Lagerfläche
- 2.2: zylindrischer Zapfen
- 2.3: Aufnahmebohrung
- 2.4: Aufnahmebohrung
- 3: Außenring
- 3.1: konkave Lagerfläche
- 3.2: Gewindebohrung
- 4: Dichtung
- 5: obere Anschlusskonstruktion
- 5.1: Ausnehmung
- 5.2: Zapfen
- 6: untere Anschlusskonstruktion
- 6.1: Ausnehmung

- a: Betrag
- h: Höhe
- M: Mittelpunkt
- β: Schwenkwinkel

## Patentansprüche

1. Anordnung zum gelenkigen Verbinden von Wagenkästen eines mehrgliedrigen Fahrzeuges mit Hilfe eines Gelenkes mit sphärischen Tragflächen, wobei das Gelenk als ein Radial-Gelenklager (1) mit einem Innenring (2) mit konvex gewölbter sphärischer Lagerfläche (2.1) und einem Außenring (3) mit konkav gewölbter sphärischer Lagerfläche (3.1) ausgebildet ist und mit einer senkrechten Lagerachse Z verbaut ist, wobei Innenring (2) und Außenring (3) von je einer Anschlusskonstruktion (5,6) aufgenommen sind, und das Radial-Gelenklager (1) asymmetrisch ausgebildet ist, wobei in Richtung der Lagerachse Z Innenring (2) und Außenring (3) zueinander versetzt angeordnet sind wobei die Lagerflächen (2.1, 3.1) der Lagerringe (2, 3) in Richtung der Achse Z ausgehend vom Mittelpunkt (M) unterschiedlich groß sind, **dadurch gekennzeichnet, dass** bezogen auf einen Mittelpunkt (M) eines kugelförmigen Teils des Innenringes (2) nach oben in Richtung der positiven Lagerachse Z der Innenring (2) den Außenring (3) und nach unten in Richtung der negativen Lagerachse Z der Außenring (3) den Innenring (2) in axialer Richtung überrag.

2. Anordnung nach Anspruch 1, **dadurch gekennzeichnet, dass** zwischen Innenring (2) und Außenring (3) eine Gleitschicht angeordnet ist.

3. Anordnung nach Anspruch 2, **dadurch gekennzeichnet, dass** die Gleitschicht aus PTFE (Polytetrafluoräthylen) besteht und als Verbundwerkstoff, Folie oder Gewebe ausgebildet ist.

4. Anordnung nach Anspruch 1, **dadurch gekennzeichnet, dass** der Außenring (3) gesprengt ist.

5. Anordnung nach Anspruch 1, **dadurch gekennzeichnet, dass** das Radial-Gelenklager mit einer Dichtung (4) versehen ist.

6. Anordnung nach Anspruch 1, **dadurch gekennzeichnet, dass** der Innenring (2) mit einem zylindrischen Zapfen (2.2) versehen ist, der von einer zugehörigen Ausnehmung (5.1) der Anschlusskonstruktion (5) aufgenommen ist, wobei beide Teile (2, 5) durch ein Befestigungsmittel (7) miteinander verbunden sind.

7. Anordnung nach Anspruch 1, **dadurch gekennzeichnet, dass** der Innenring (2) mit einer Aufnahmebohrung (2.3) versehen ist, in die ein zugehöriger Zapfen (5.2) der Anschlusskonstruktion (5) eingreift und beide Teile (2, 5) durch ein Befestigungsmittel (7) miteinander verbunden sind.

8. Anordnung nach Anspruch 1, **dadurch gekennzeichnet, dass** der Außenring (3) von einer Ausnehmung (6.1) der Anschlusskonstruktion (6) aufgenommen ist und beide Teile (3, 6) durch ein Befestigungsmittel (7) miteinander verbunden sind.

9. Anordnung nach einem der vorangegangen Ansprüche, **dadurch gekennzeichnet, dass** die Lagerflächen (2.1, 3.1) in Richtung der negativen Z-Achse größer sind als die Lagerflächen (2.1, 3.1) in Richtung der positiven Z-Achse.

## Claims

1. Arrangement for the articulated connection of wagon bodies of a multiple-element vehicle with the aid of a joint having spherical bearing faces, the joint being configured as a radial pivot bearing (1) having an inner ring (2) with a convexly curved spherical bearing face (2.1) and having an outer ring (3) with a concavely curved spherical bearing face (3.1), and being installed with a perpendicular bearing axis Z, the inner ring (2) and the outer ring (3) being received by in each case one connecting construction (5, 6), and the radial pivot bearing (1) being asymmetrically configured, the inner ring (2) and the outer ring (3) being offset with respect to each other in the direction of the bearing axis Z, the bearing faces (2.1, 3.1) of the bearing rings (2, 3) being of different size in the direction of the axis Z, starting from the centre point (M), **characterized in that**, in relation to a centre point (M) of a spherical part of the inner ring (2), the inner ring (2) protrudes beyond the outer ring (3) in the axial direction upwards in the direction of the positive bearing axis Z, and the outer ring (3) protrudes beyond the inner ring (2) in the axial direction downwards in the direction of the negative bearing axis Z.

2. Arrangement according to Claim 1, **characterized in that** a sliding layer is arranged between the inner ring (2) and the outer ring (3).

3. Arrangement according to Claim 2, **characterized in that** the sliding layer is composed of PTFE (polytetrafluoroethylene) and is configured as a composite material, film or woven fabric.

4. Arrangement according to Claim 1, **characterized in that** the outer ring (3) is split.

5. Arrangement according to Claim 1, **characterized in that** the radial pivot bearing is provided with a seal (4).

6. Arrangement according to Claim 1, **characterized in that** the inner ring (2) is provided with a cylindrical journal (2.2) which is received by an associated recess (5.1) of the connecting construction (5), both parts (2, 5) being connected to one another by a fastening means (7).

7. Arrangement according to Claim 1, **characterized in that** the inner ring (2) is provided with a receiving hole (2.3), into which an associated journal (5.2) of the connecting construction (5) engages, and both parts (2, 5) are connected to one another by a fastening means (7).

8. Arrangement according to Claim 1, **characterized in that** the outer ring (3) is received by a recess (6.1) of the connecting construction (6) and both parts (3, 6) are connected to one another by a fastening means (7).

9. Arrangement according to one of the preceding claims, **characterized in that** the bearing faces (2.1, 3.1) in the direction of the negative Z-axis are larger than the bearing faces (2.1, 3.1) in the direction of the positive Z-axis.

## Revendications

1. Agencement pour l'accouplement articulé de wagons d'un véhicule à unité multiples à l'aide d'une articulation à surfaces portantes sphériques, l'articulation étant réalisée sous forme de palier à rotule radial (1) avec une bague interne (2) ayant une surface de palier sphérique de courbure convexe (2.1) et une bague externe (3) ayant une surface de palier sphérique de courbure concave (3.1) et étant construite avec un axe de palier Z vertical, la bague interne (2) et la bague externe (3) étant reçues chacune par une construction de raccordement (5, 6) et le palier à rotule radial (1) étant réalisé sous forme asymétrique, la bague interne (2) et la bague externe (3) étant disposées de manière décalée l'une par rapport à l'autre dans la direction de l'axe de palier Z, les surfaces de palier (2.1, 3.1) des bagues de palier (2, 3) ayant des dimensions différentes dans la direction de l'axe Z, partant d'un centre (M), **caractérisé en ce que** par rapport au centre (M) d'une partie sphérique de la bague interne (2), dans la direction axiale, la bague interne (2) dépasse de la bague externe (3) vers le haut dans la direction de l'axe de palier positif Z et la bague externe (3) dépasse de la bague interne (2) vers le bas dans la direction de l'axe de palier négatif Z.

2. Agencement selon la revendication 1, **caractérisé en ce qu'**entre la bague interne (2) et la bague externe (3) est disposée une couche de glissement.

3. Agencement selon la revendication 2, **caractérisé en ce que** la couche de glissement se compose de PTFE (polytétrafluoroéthylène) et est réalisée sous forme de matériau composite, de feuille ou de tissu.

4. Agencement selon la revendication 1, **caractérisé en ce que** la bague externe (3) est une bague de serrage.

5. Agencement selon la revendication 1, **caractérisé en ce que** le palier à rotule radial est pourvu d'un joint d'étanchéité (4).

6. Agencement selon la revendication 1, **caractérisé en ce que** la bague interne (2) est pourvue d'un tourillon cylindrique (2.2) qui est reçu par un évidement associé (5.1) de la construction de raccordement (5), les deux pièces (2, 5) étant connectées l'une à l'autre par un moyen de fixation (7).

7. Agencement selon la revendication 1, **caractérisé en ce que** la bague interne (2) est pourvue d'un alésage de réception (2.3) dans lequel s'engage un tourillon associé (5.2) de la construction de raccordement (5) et les deux pièces (2, 5) sont connectées l'une à l'autre par un moyen de fixation (7).

8. Agencement selon la revendication 1, **caractérisé en ce que** la bague externe (3) est reçue par un évidement (6.1) de la construction de raccordement (6) et les deux pièces (3, 6) sont connectées l'une à l'autre par un moyen de fixation (7).

9. Agencement selon l'une quelconque des revendications précédentes, **caractérisé en ce que** les surfaces de palier (2.1, 3.1) sont plus grandes dans la direction de l'axe négatif Z que les surfaces de palier (2.1, 3.1) dans la direction de l'axe positif Z.
